(19) Europäisches Patentamt
European Patent Office
Office européen des brevets

(11) **EP 4 787 286 A1**

(12) **EUROPÄISCHE PATENTANMELDUNG**

(43) Veröffentlichungstag:
**05.08.2026   Patentblatt 2026/32**

(21) Anmeldenummer: **26154713.7**

(22) Anmeldetag: **28.01.2026**

(51) Internationale Patentklassifikation (IPC):
*G06T 3/00* (2024.01)    *B60R 1/26* (2022.01)

(52) Gemeinsame Patentklassifikation (CPC):
**G06T 3/00; B60R 1/26;** B60R 2300/306;
G06T 2207/30252

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **31.01.2025  DE 102025103622**

(71) Anmelder: **MEKRA Lang GmbH & Co. KG**
**91465 Ergersheim (DE)**

(72) Erfinder: **Enz, Andreas**
**91593 Burgbernheim (DE)**

(74) Vertreter: **Winter, Brandl - Partnerschaft mbB**
**Alois-Steinecker-Straße 22**
**85354 Freising (DE)**

(54) **INDIREKTES SICHTSYSTEM UND FAHRZEUG MIT DEM INDIREKTEN SICHTSYSTEM**

(57)    Die vorlegende Offenbarung betrifft ein indirektes Sichtsystem für ein Fahrzeug, wobei das indirekte Sichtsystem aufweist: eine Bildaufnahmeeinheit, die einen einzigen Bildsensor und ein Objektiv aufweist und die ausgebildet und an dem Fahrzeug derart anzubringen oder angebracht ist, dass mehrere vorgegebene Bereiche in einer Umgebung des Fahrzeugs durch den Bildsensor in einem Ausgangsbild erfassbar sind, wobei das Objektiv und der Bildsensor derart zueinander angeordnet sind, dass ein Mittelpunkt des Objektivs und ein Mittelpunkt des Bildsensors zueinander versetzt sind, eine Verarbeitungseinheit, die ausgebildet ist, um das Ausgangsbild in ein Transformationsbild zu transformieren, und eine Wiedergabeeinheit, die ausgebildet ist, um zumindest einen Ausschnitt des Transformationsbilds anzuzeigen. Die Verarbeitungseinheit ist ausgebildet, um das Ausgangsbild zumindest teilweise entsprechend einem Ausgangsnetz in Ausgangsbildbereiche zu unterteilen und die Ausgangsbildbereiche in Transformationsbildbereiche, die durch ein Transformationsnetz festgelegt sind, zu transformieren. Das Transformationsnetz ist derart ausgebildet, dass die vorgegebenen Bereiche in dem auf der Wiedergabeeinheit angezeigten Ausschnitt des Transformationsbilds entsprechend einer jeweiligen Vorgabe anzeigbar sind.

Fig. 4

**Beschreibung**

Die vorliegende Offenbarung betriff ein indirektes Sichtsystem für ein Fahrzeug, wobei das indirekte Sichtsystem insbesondere als ein Spiegelersatzsystem verwendet wird. Die vorliegende Offenbarung betrifft ferner ein Fahrzeug mit dem indirekten Sichtsystem.

Ein indirektes Sichtsystem für Fahrzeuge ist aus EP 2 765 031 B1 bekannt. Das darin offenbarte indirekte Sichtsystem weist eine an einem Fahrzeug angebrachte Bildaufnahmeeinheit, eine mit der Bildaufnahmeeinheit in Verbindung stehende Berechnungseinheit und eine mit der Berechnungseinheit in Verbindung stehende Wiedergabeeinheit auf. Die Bildaufnahmeeinheit umfasst ein Objektiv mit einer optischen Achse und eine digitale Bilderfassungseinheit, wobei die Bildaufnahmeeinheit so am Fahrzeug angebracht ist, dass sie zumindest einen Teil eines ersten gesetzlich vorgeschriebenen Sichtfelds und zumindest einen Teil eines zweiten gesetzlich vorgeschriebenen Sichtfelds auf einer Seite des Fahrzeugs erfasst. Das Objektiv ist mit seiner optischen Achse dabei exzentrisch zu einem Mittelpunkt der digitalen Bilderfassungseinheit angeordnet.

Aus der DE 10 2014 006 153 A1 ist zudem ein Verfahren zur Bilddarstellung eines indirekten Sichtfelds im Fahrzeugumfeld eines Fahrzeugs bekannt.

Weiterhin offenbart die DE 10 2014 006 150 B4 ein Verfahren zur Darstellung unterschiedlicher indirekter Sichtfelder eines Fahrzeugs.

Es ist Aufgabe der vorliegenden Offenbarung eine Technik bereitzustellen, die es ermöglicht, mehrere Bereiche in einer Umgebung eines Fahrzeugs übergangslos, d. h. ohne Stitchingkante oder Bereichsgrenze, anzuzeigen.

Diese Aufgabe wird durch das indirekte Sichtsystem sowie das Fahrzeug mit den Merkmalen gemäß den unabhängigen Ansprüchen gelöst. Vorteilhafte Ausführungsformen sind Gegenstand der abhängigen Ansprüche.

Ein offenbarungsgemäßes indirektes Sichtsystem wird insbesondere für ein Fahrzeug verwendet. Das Fahrzeug ist insbesondere ein Fahrzeug gemäß der EU-Fahrzeugklasse N. Das Fahrzeug kann auch ein Nutzfahrzeug sein, wie etwa Lastkraftwagen (LKW), Transporter, Kastenwagen, Pritschenwagen, Kühlwagen, Kipper, Sattelzugmaschine, Muldenkipper, Tankfahrzeug, Autotransporter, Abschleppwagen, Müllwagen, Lieferwagen, Baustellenfahrzeug, Mobilkran, Betonmischer, Pannenhilfefahrzeug, Zugmaschine, Kehrmaschine, Feuerwehrfahrzeug, Rettungswagen, Gelenkbus, Linienbus oder Reisebus.

Das indirekte Sichtsystem umfasst eine Bildaufnahmeeinheit, die einen einzigen Bildsensor und ein Objektiv aufweist und die ausgebildet und an dem Fahrzeug derart anzubringen oder angebracht ist, dass mehrere vorgegebene Bereiche in einer Umgebung des Fahrzeugs durch den Bildsensor in einem Ausgangsbild erfassbar sind. Die mehreren Bereiche können dabei einander überlappen oder voneinander getrennt, beispielsweise aneinanderliegend bzw. benachbart oder voneinander beabstandet, sein.

Zum Bilden der Bildaufnahmeeinheit können der Bildsensor und das Objektiv in einem gemeinsamen Gehäuse aufgenommen sein. Das Gehäuse kann dabei eine Vorrichtung zum Anbringen an eine Karosserie des Fahrzeugs bilden. Das Gehäuse kann auch durch eine Karosseriekomponente des Fahrzeugs gebildet sein. Die Bildaufnahmeeinheit kann dabei im Bereich einer A-Säule an einer oberen Kante des Fahrzeugs in etwa 2 bis 3,5 m Höhe angebracht sein. Das Fahrzeug kann darüber hinaus mehrere indirekte Sichtsysteme, beispielsweise auf einer Fahrerseite und auf einer Beifahrerseite des Fahrzeugs, aufweisen. Weiterhin ist es auch denkbar, dass das indirekte Sichtsystem in einem Innenraum des Fahrzeugs installiert ist und einen hinter dem Fahrzeug liegenden Bereich, ähnlich einem Rückspiegel, erfasst. Das indirekte Sichtsystem kann zusätzlich zu einem Spielsystem oder als Alternative dazu, d.h. als Spiegelersatzsystem, an dem Fahrzeug installiert sein.

Das Objektiv kann mehrere Linsen aufweisen. Mit Vorteil weist das Objektiv einen festen Öffnungswinkel auf, ist also kein Zoomobjektiv, sondern ein Festbrennweiteobjektiv. Darüber hinaus ist die Ausrichtung des Objektivs starr, d.h. die Ausrichtung ist nur durch Neujustierung des Gehäuses an dem Fahrzeug änderbar. Weiterhin kann das Objektiv ein Weitwinkelobjektiv, ein Superweitwinkelobjektiv oder ein Fischeye-Objektiv sein. Bevorzugt erreichen der Bildsensor und das Objektiv einen Öffnungswinkel von 160° bis 220°, noch bevorzugter von 180° bis 200°.

Das Objektiv und der Bildsensor sind derart zueinander angeordnet, dass ein Mittelpunkt des Objektivs und ein Mittelpunkt des Bildsensors zueinander versetzt sind. D.h. eine durch den Mittelpunkt des Objektivs verlaufende Objektivachse verläuft exzentrisch durch den Bildsensor. Dabei können die Objektivachse und eine Flächennormale des Bildsensors parallel zueinander sein. Es ist aber auch denkbar, dass die Objektivachse und die Flächennormale des Bildsensors nicht parallel verlaufen. Auf diese Weise wird der Bereich auf dem Bildsensor, der durch den Mittelpunkt des Objektivs abgebildet wird, mit geringer Verzerrung aufgenommen.

Das indirekte Sichtsystem umfasst ferner eine Verarbeitungseinheit, die ausgebildet ist, um das Ausgangsbild in ein Transformationsbild zu transformieren. Das bedeutet, die Verarbeitungseinheit führt eine Bildtransformation aus. Die Verarbeitungseinheit kann dabei ein Mikrocomputer, der die Bildtransformation durch Ausführen eines entsprechenden Computerprogramms ausführt, sein. Die Verarbeitungseinheit kann dabei in dem Gehäuse der Bilderfassungseinheit oder separat dazu angeordnet sein. Die Verarbeitungseinheit kann aber auch in unmittelbarer Nähe zu einer nachfolgend beschriebenen Wiedergabeeinheit angeordnet oder durch diese gebildet sein.

Weiterhin umfasst das indirekte Sichtsystem eine Wiedergabeeinheit, die ausgebildet ist, um zumindest einen Ausschnitt des Transformationsbilds anzuzeigen. Das bedeutet, dass die Wiedergabeeinheit eine optische Anzeigeeinheit, wie etwa ein Display, sein kann. Die Wiedergabeeinheit kann dabei eine Touch-Eingabefunktion aufweisen. Die Wiedergabeeinheit kann dediziert für das indirekte Sichtsystem bereitgestellt sein. Alternativ kann die Wiedergabeeinheit auch durch eine in einem Innenraum des Fahrzeuges installierte optische Anzeigeeinheit, die beispielsweise in einer Mittelkonsole installiert ist, gebildet sein. Der Ausschnitt des Transformationsbilds kann dabei vollflächig oder in einem vorgegebenen Bereich der Wiedergabeeinheit angezeigt werden. Der Ausschnitt des Transformationsbilds wird dabei entsprechend dem Seitenverhältnis der Wiedergabeeinheit oder des vorgegebenen Bereichs der Wiedergabeeinheit angezeigt. Dabei kann der angezeigte Ausschnitt des Transformationsbilds auch durch einen Fahrer manuell, z.B. mittels eines vorgesehenen Einstellknopfs, verändert werden. Zusätzlich kann der angezeigte Ausschnitt des Transformationsbilds während einer Fahrt des Fahrzeugs, beispielsweise bei einer Kurvenfahrt, automatisch verändert werden. Beispielsweise kann der angezeigte Ausschnitt des Transformationsbilds derart automatisch verändert werden, dass ein größerer Bereich in Kurvenrichtung anzeigbar ist oder angezeigt wird. Bei Änderungen des angezeigten Ausschnitts des Transformationsbilds kann dabei sogar der Fall eintreten, dass ein durch den Mittelpunkt des Objektivs abgebildeter Punkt nicht auf der Wiedergabeeinheit angezeigt wird. Es ist auch denkbar, dass die manuelle Veränderung des Ausschnitts bei einer Fahrt mit einer vorgegebenen Geschwindigkeit oder höher wieder auf eine Standardanzeige, in der die mehreren Bereiche beispielsweise jeweils wieder vollständig angezeigt werden, umgestellt wird.

Die Verarbeitungseinheit ist ausgebildet, das Ausgangsbild zumindest teilweise entsprechend einem Ausgangsnetz in Ausgangsbildbereiche zu unterteilen. Das bedeutet, die Verarbeitungseinheit legt das Ausgangsnetz über das Ausgangsbild, um die Ausgabebildbereiche zu erhalten. Die Verarbeitungseinheit ist ferner ausgebildet, die Ausgangsbildbereiche in Transformationsbildbereiche, die durch ein Transformationsnetz festgelegt sind, zu transformieren. Dabei ist das Transformationsnetz derart ausgebildet, dass die vorgegebenen Bereiche in dem auf der Wiedergabeeinheit angezeigten Ausschnitt des Transformationsbilds entsprechend einer jeweiligen Vorgabe anzeigbar sind bzw. angezeigt werden. Die Vorgabe für die einzelnen Bereiche kann dabei eine Größe und/oder eine Schärfe und/oder einen Vergrößerungsfaktor und/oder eine Verzerrung und/oder eine Vollständigkeit umfassen. Das Transformationsnetz kann dabei vorhergehend festgelegt sein. Diese vorhergehende Festlegung kann insbesondere anhand von Referenzbilder und/oder von Simulationen erfolgen. Durch eine derartige Transformation des Ausgangsbilds, das durch die Bilderfassungseinheit mit dem einzigen Bildsensor aufgenommen wurde, können die mehreren Bereiche um das Fahrzeug herum in einer einzigen Anzeige übergangslos, d.h. ohne Stitchingkante oder Bereichsgrenze, angezeigt werden. Dies erleichtert einem Fahrer ein Steuern des Fahrzeugs unter Verwendung des indirekten Sichtsystems, wie etwa beim Rückwärtsrangieren des Fahrzeugs. Hierbei ist anzumerken, dass die Transformation unter Verwendung des Ausgangsnetzes und des Transformationsnetzes nicht einer Objektivkorrektur zum verzerrungsfreien Anzeigen des Ausschnitts des Transformationsbilds auf der Wiedergabeeinheit entspricht. Nichtdestotrotz kann bei der Festlegung des Transformationsnetzes auch eine Objektivkorrektur erfolgen.

Das Ausgangsnetz und das Transformationsnetz können einander entsprechende Kanten und Knoten, die als Stützstellen für die Ausgangsbildbereiche bzw. die Transformationsbildbereiche fungieren, aufweisen. D. h. das Ausgangsnetz und das Transformationsnetz weisen dieselbe Anzahl an Kanten und Knoten auf. Somit wird in dem Ausgangsbild und dem Transformationsbild dieselbe Anzahl an Bereichen erhalten und die Bereiche werden durch die entsprechenden Knoten bzw. Kanten definiert. Im Transformationsnetz können einige der Kanten und/oder der Knoten gegenüber dem Ausgangsnetz verändert sein. Demzufolge kann sich eine Form eines Transformationsbereichs von der des ihm entsprechenden Ausgangsbildbereichs unterscheiden. Die Verarbeitungseinheit kann ausgebildet sein, um die durch die im Transformationsnetz im Vergleich zum Ausgangsnetz veränderten Kanten und/oder veränderten Knoten gestützten Ausgangsbildbereiche mittels Interpolation in die Transformationsbildbereiche zu transformieren. Demzufolge kann die Verarbeitungseinheit ausgebildet sein, um eine Netztransformation auszuführen, um das Ausgangsbild in das Transformationsbild zu transformieren.

Dabei kann der Verlauf bzw. die Form und/oder die Lage der Kanten und/oder die Lage der Knoten in dem Transformationsnetz gegenüber dem Ausgansnetz verändert sein. Insbesondere werden die Verläufe und/oder die Lagen der Kanten und/oder die Lage der Knoten im Transformationsnetz gegenüber dem Ausgangsnetz so verändert, dass ein kontinuierlicher Übergang zwischen den dadurch definierten Ausgangsbildbereichen erhalten bleibt. Durch die Anpassung der Kanten und Knoten können die dazwischen definierten Bereiche gestaucht, gestreckt, gekrümmt, begradigt, verkleinert, vergrößert und/oder verzerrt werden.

Weiterhin kann die Verarbeitungseinheit ausgebildet sein, um das Ausgangsnetz und/oder das Transformationsnetz anzupassen. Die Anpassung des Ausgangsnetzes und/oder des Transformationsnetzes kann dabei insbesondere dynamisch erfolgen. Bei der dynamischen Anpassung verwendet die Verarbeitungseinheit mehrere Ausgangsnetze und/oder mehrere Transformationsnetze der Reihe nach bei der Transformation des Ausgangsbilds in das Transformationsbild. Die Anpassung des Ausgangsnetzes und/oder des Transformationsnetzes kann dabei erfolgen, um einer Änderung einer jeweiligen Vorgabe der mehrere Bereiche Rechnung zu tragen. Die jeweilige Vorgabe der mehreren Bereich kann sich dabei entsprechend einer Fahrsituation ändern.

Die Verarbeitungseinheit kann ausgebildet sein, um das Ausgangsnetz und/oder das Transformationsnetz bei automatischer oder manueller Verstellung des auf der Wiedergabeeinheit angezeigten Ausschnitts des Transformationsbilds und/oder bei einer Ansichtsumstellung auf der Wiedergabeeinheit anzupassen. Wie bereits oben beschrieben, kann ein auf der Wiedergabeeinheit angezeigter Ausschnitt des Transformationsbilds beispielsweise durch einen Fahrer manuell oder bei einer Kurvenfahrt automatisch geändert werden. Weiterhin ist es auch denkbar, dass auf der Wiedergabeeinheit eine Umstellung von einer vollflächigen Anzeige des Ausschnitts des Transformationsbilds hin zu einer teilweisen Anzeige des Ausschnitts des Transformationsbilds mit einem anderen Seitenverhältnis erfolgt. Insbesondere erfolgt die Anpassung des Ausgangsnetzes und/oder des Transformationsnetzes dynamisch. D. h. während der manuellen/automatischen Änderung des angezeigten Ausschnitts des Transformationsbilds oder während einer Ansichtsumstellung verwendet die Verarbeitungseinheit mehrere Ausgangsnetze und oder Transformationsnetze der Reihe nach. Auf diese Weise wird sichergestellt, dass die mehreren Bereiche um das Fahrzeug herum auch nach bzw. während einer Änderung des angezeigten Ausschnitts des Transformationsbilds oder einer Ansichtsumstellung entsprechend ihrer jeweiligen Vorgabe angezeigt werden.

Mit Vorteil ist der Mittelpunkt des Objektivs im Vergleich zum Mittelpunkt des Bildsensors in Richtung des Fahrzeugs hin verschoben ist. Der Bildsensor ist nämlich in einem indirekten Sichtsystem oftmals derart angeordnet, dass er nur in einem kleinen Randbereich eine Fahrzeugseite abbildet. Würden nun der Mittelpunkt des Objektivs und der Mittelpunkt des Bildsensors übereinstimmen, würde die Fahrzeugseite aufgrund des vergleichsweise großen Öffnungswinkels stark verzerrt angezeigt werden. Durch Verschiebung des Mittelpunkts des Objektivs hin zum Fahrzeug wird die Fahrzeugseite jedoch ohne oder zumindest mit vergleichsweise geringer Verzerrung auf dem Bildsensor abgebildet.

Der Mittelpunkt des Objektivs kann einen Punkt, der innerhalb eines Abstands von bis zu 1,5 m zu einer Seite des Fahrzeugs liegt, abbilden. Der abgebildete Punkt liegt dabei insbesondere auf einem Boden, der sich neben dem Fahrzeug befindet. Auf diese Weise werden mehrere Bereiche das Fahrzeug herum auf dem Bildsensor abgebildet, die für ein sicheres Führen des Fahrzeugs erforderlich sind.

Das Transformationsnetz kann derart ausgebildet sein, dass eine als Fahrzeugreferenz verwendete Kante des Fahrzeugs in dem Transformationsbild als eine im Wesentlichen gerade Linie dargestellt ist. Die Kante dient dabei einem Fahrer des Fahrzeugs als eine Orientierung beim Führen, wie etwa einem Rückwärtsrangieren, des Fahrzeugs und durch die gerade Anzeige wird dem Fahrer ein einfacheres und somit sicheres Führen ermöglicht. Die als Fahrzeugreferenz verwendete Kante kann dabei eine seitliche Unterkante des Fahrzeugs sein. Die verwendete Kante kann sich dabei über mehrere Fahrzeugbestandteile, wie etwa eine Zugmaschine und einen Anhänger bei gerader Ausrichtung zueinander, erstrecken.

Außerdem kann das Transformationsnetz derart ausgebildet sein, dass eine seitliche Verlängerung einer Vorderkante des Fahrzeugs in dem Transformationsbild als eine gerade Linie dargestellt ist. Die seitliche Verlängerung ist dabei insbesondere eine gedachte Weiterführung der Vorderkante. Durch die gerade Anzeige dieser seitlichen Verlängerung wird dem Fahrer ein besseres Verständnis der um das Fahrzeug herum vorhanden mehreren Bereiche und somit ein sicheres Führen des Fahrzeugs ermöglicht.

Die mehreren Bereiche können mindestens einen Bereich, der sich von einer Vorderkante des Fahrzeugs bis zu einem hinter dem Fahrzeug liegenden Horizont mit einem vorgegebenen Abstand neben dem Fahrzeug erstreckt, umfassen. Der vorgegebene Abstand kann dabei 1,5 m betragen. Dieser Bereich kann dabei in dem auf der Wiedergabeeinheit angezeigten Ausschnitt des Transformationsbilds vollständig enthalten sein. Das bedeutet der Ausschnitt des Transformationsbilds kann nicht so geändert werden, dass dieser Bereich nicht auf der Wiedergabeeinheit angezeigt wird. Der oben beschriebene Bereich stellt einen sicherheitsrelevanten Bereich beim Führen eines Fahrzeugs dar und die vollständige Anzeige des Bereichs auf der Wiedergabeeinheit erhöht somit eine Sicherheit beim Fahren, insbesondere einem Rückwärtsrangieren, das Fahrzeugs.

Dabei kann das Fahrzeug einen Anhänger umfassen. Das Fahrzeug ist dabei insbesondere ein LKW. In dem auf der Wiedergabeeinheit angezeigten Ausschnitt des Transformationsbilds kann in diesem Fall eine vordere, obere Ecke des Anhängers enthalten sein. Die vordere obere Ecke des Anhängers stellt für einen Fahrer beim Rückwärtsrangieren einen wichtigen Referenzpunkt dar, sodass durch diese Anzeige eine Sicherheit beim Rückwärtsrangieren des Fahrzeugs, insbesondere des LKWs, mit Anhänger erhöht ist.

Die mehreren Bereiche können dabei die gesetzlichen Sichtfelder II und IV nach UN/ECE-R46 (Stand: Revision 7, Amendment 2) umfassen. Bevorzugt können die mehreren Bereiche auch das gesetzliche Sichtfeld V nach UN/ECE-R46 (Stand: Revision 7, Amendment 2) umfassen. Noch bevorzugter können die mehrere Bereiche auch ein größeres Sichtfeld nach UN/ECE-R46 (Stand: Revision 7, Amendment 2) umfassen.

Ein gesetzliches Sichtfeld gemäß Klasse II auf der Fahrerseite muss so beschaffen sein, dass der Fahrer mindestens einen 5 m breiten, ebenen und horizontalen Teil der Fahrbahn übersehen kann, der von einer Ebene, die parallel zur senkrechten Längsmittelebene verläuft und durch den äußersten Punkt des Fahrzeugs auf der Fahrerseite des Fahrzeugs geht, begrenzt ist und sich von 30 m hinter den Augenpunkten des Fahrers bis zum Horizont erstreckt. Außerdem muss die Fahrbahn für den Fahrer auf einer Breite von 1 m sichtbar sein, die von einer Ebene begrenzt ist, die parallel zur senkrechten Längsmittelebene verläuft und von einem Punkt 4 m hinter der durch die Augenpunkte des Fahrers verlaufenden senkrechten Ebene durch den äußersten Punkt des Fahrzeugs verläuft.

Ein gesetzliches Sichtfeld gemäß Klasse II auf der Beifahrerseite muss so beschaffen sein, dass der Fahrer mindestens einen 5 m breiten, ebenen und horizontalen Teil der Fahrbahn übersehen kann, der auf der Beifahrerseite durch eine zur senkrechten Längsmittelebene des Fahrzeugs parallele und durch den äußersten Punkt auf der Fahrerseite des Fahrzeugs verlaufende Ebene begrenzt ist und sich vom Horizont bis 30 m hinter den Augenpunkten des Fahrers erstreckt. Außerdem muss die Straße für den Fahrer über eine Breite von 1 m einsehbar sein, die durch eine Ebene begrenzt ist, die parallel zur vertikalen Längsmittelebene des Fahrzeugs verläuft und durch den äußersten Punkt des Fahrzeugs geht, ausgehend von einem Punkt 4 m hinter der vertikalen Ebene, die durch die Augenpunkte des Fahrers verläuft.

Ein gesetzliches Sichtfeld gemäß Klasse IV auf der Fahrerseite muss so beschaffen sein, dass der Fahrer mindestens einen 15 m breiten, ebenen und horizontalen Teil der Fahrbahn übersehen kann, der durch eine Ebene, die parallel zur senkrechten Längsmittelebene des Fahrzeugs verläuft und durch den äußersten Punkt auf der Fahrerseite des Fahrzeugs geht, begrenzt ist und sich von mindestens 10 m bis 25 m hinter den Augenpunkten des Fahrers erstreckt. Außerdem muss die Straße für den Fahrer auf einer Breite von 4,5 m einsehbar sein, die durch eine Ebene begrenzt ist, die parallel zur senkrechten Längsmittelebene des Fahrzeugs verläuft und durch den äußersten Punkt des Fahrzeugs geht, ausgehend von einem Punkt 1,5 m hinter der senkrechten Ebene, die durch die Augenpunkte des Fahrers verläuft.

Ein gesetzliches Sichtfeld gemäß Klasse IV auf der Beifahrerseite muss so beschaffen sein, dass der Fahrer mindestens einen 15 m breiten, ebenen und horizontalen Teil der Fahrbahn übersehen kann, der durch eine Ebene, die parallel zur senkrechten Längsmittelebene des Fahrzeugs verläuft und durch den äußersten Punkt auf der Beifahrerseite des Fahrzeugs geht, begrenzt ist und sich von mindestens 10 m bis 25 m hinter den Augenpunkten des Fahrers erstreckt. Außerdem muss die Straße für den Fahrer auf einer Breite von 4,5 m einsehbar sein, die durch eine Ebene begrenzt ist, die parallel zur senkrechten Längsmittelebene des Fahrzeugs verläuft und durch den äußersten Punkt des Fahrzeugs geht, ausgehend von einem Punkt 1,5 m hinter der senkrechten Ebene, die durch die Augenpunkte des Fahrers verläuft.

Ein Sichtfeld gemäß Klasse V ist dabei gemäß UN/ECE-R46 nur auf der Beifahrerseite zu überwachen und muss so beschaffen sein, dass der Fahrer einen ebenen und horizontalen Teil der Fahrbahn seitlich des Fahrzeugs sehen kann, der durch die folgenden vertikalen Ebenen begrenzt wird: Durch eine Ebene, die parallel zur vertikalen Längsmittelebene des Fahrzeugs ist und durch den äußersten Punkt der Fahrzeugkabine auf der Beifahrerseite verläuft. In Querrichtung durch eine parallele Ebene, die in einem Abstand von 2 m vor der vorher genannten Ebene verläuft. In Rückwärtsrichtung durch eine Ebene, die parallel zur vertikalen Ebene, die durch die Augenpunkte des Fahrers verläuft, ist und sich in einem Abstand von 1,75 m hinter dieser Ebene befindet. In Vorwärtsrichtung durch eine Ebene, die parallel zur vertikalen Ebene, die durch die Augenpunkte des Fahrers verläuft, ist und sich in einem Abstand von 1 m vor dieser Ebene befindet. Wenn die vertikale Querebene, die durch die Vorderkante des Stoßfängers des Fahrzeugs verläuft, weniger als 1 m vor der vertikalen Ebene, die durch die Augenpunkte des Fahrers verläuft, liegt, ist das Sichtfeld auf diese Ebene zu begrenzen.

Ein Sichtfeld gemäß Klasse V kann aber analog in gespiegelter Weise auch auf der Fahrerseite angezeigt werden.

Für den Fall, dass die Bilderfassungseinheit oberhalb einer Höhe von 2,4 m angebracht ist, ist nur auf der Beifahrerseite ein größeres Sichtfeld zu überwachen, das außerdem so beschaffen sein muss, dass der Fahrer einen ebenen und horizontalen Teil der Fahrbahn seitlich des Fahrzeugs einsehen kann, der außerhalb des Sichtfeldes V liegt, aber innerhalb des begrenzten Feldes, das durch die folgenden vertikalen Ebenen begrenzt ist: In Querrichtung, durch die parallele Ebene, die in einem Abstand von 4,5 m vor der Ebene, die durch den äußersten Punkt der Fahrzeugkabine auf der Beifahrerseite verläuft. In Rückwärtsrichtung, durch eine Ebene, die parallel zu der Ebene, die durch die Augenpunkte des Fahrers verläuft, ist, und sich in einem Abstand von 1,75 m hinter dieser Ebene befindet. In Vorwärtsrichtung durch eine Ebene, die parallel zu einer vertikalen Ebene, die durch die Augenpunkte des Fahrers verläuft, ist und sich in einem Abstand von 3 m vor dieser Ebene befindet. Die Vorderseite dieses vergrößerten Sichtfeldes kann mit einem Radius von 2.000 mm abgerundet sein.

Das Transformationsnetz kann in diesem Fall derart ausgebildet sein, dass die gesetzlichen Sichtfelder II und IV nach UN/ECE-R46 gemäß einer jeweiligen gesetzlichen Vorgabe auf der Wiedergabeeinheit anzeigbar sind bzw. angezeigt werden. Bevorzugt kann das Transformationsnetz auch so ausgebildet sein, dass es das gesetzliche Sichtfeld V gemäß einer jeweiligen gesetzlichen Vorgabe nach UN/ECE-R46 anzeigt. Noch bevorzugter kann das Transformationsnetz auch so ausgebildet sein, dass es das vergrößerte Sichtfeld gemäß einer jeweiligen gesetzlichen Vorgabe nach UN/ECE-R46 anzeigt.

Nachfolgend werden ausgewählte Vorgaben aus der UN/ECE-R46 angegeben. Weitere Vorgaben können aus der UN/ECE-R46 (Stand: Revision 7, Amendment 2) übernommen werden.

Ein minimaler Vergrößerungsfaktor darf nicht geringer sein als:

- für Klasse II (Fahrerseite): 0,26;
- für Klasse IV (Fahrerseite): 0,054;
- für Klasse II (Beifahrerseite): 0,13;
- für Klasse IV (Beifahrerseite): 0,016.

Ein durchschnittlicher Vergrößerungsfaktor darf nicht geringer sein als:

- für Klasse II (Fahrerseite): 0,31;
- für Klasse IV (Fahrerseite): 0,091;
- für Klasse II (Beifahrerseite): 0,16;
- für Klasse IV (Beifahrerseite): 0,046.

Im erforderlichen Sichtfeld muss der Unterschied zwischen dem durchschnittlichen Vergrößerungsfaktor für die horizontale und vertikale Richtung folgende Gleichungen erfüllen.

Für das Sichtfeld II gilt folgender zulässiger Bereich:

$$-0.42 \leq 1 - \frac{M_{system/hor/avg}}{M_{system/ver/avg}} \leq 0.3$$

Für Geräte der Klasse IV ist keine Beschränkung des Vergrößerungsfaktors erforderlich.

Zusätzlich sollen die genannten Sichtfelder II und IV sowie bevorzugt das Sichtfeld V und noch bevorzugter das vergrößerte Sichtfeld vollständig auf der Wiedergabeeinheit angezeigt werden.

Außerdem ist es bevorzugt, wenn das Sichtfeld II verzerrungsfrei angezeigt wird.

Die Kanten und Knoten des Ausgangsnetzes können so angeordnet sein, dass das Ausgangsnetz Maschen mit einer unterschiedlichen Größe und/oder Form bildet. Demzufolge kann das Ausgangsnetz bereits hinsichtlich einer durchzuführenden Transformation für die Ausgangsbildbereiche, so dass die um das Fahrzeug herum vorhandenen mehreren Bereiche entsprechend ihrer jeweiligen Vorgabe angezeigt werden, festgelegt werden.

Insbesondere kann die Größe und/oder die Form der Maschen des Ausgangsnetzes entsprechend einer Stärke der durchzuführenden Transformation des Ausgangsbilds in das Transformationsbild festgelegt sein. Insbesondere können die Maschen in Bereichen des Ausgangsbilds, in denen eine stärkere Transformation zu erfolgen hat, feiner festgelegt sein, sodass eine genauere Einstellung ermöglicht ist. In Bereichen des Ausgangsbilds, in denen nur eine schwächere Transformation durchzuführen ist, können die Maschen gröber festgelegt sein, wodurch ein Rechenaufwand in der Verarbeitungseinheit reduziert ist.

Ein offenbarungsgemäßes Fahrzeug, weist das oben beschriebene indirekte Sichtsystem auf. Das Fahrzeug kann dabei ein Fahrzeug der EU-Fahrzeugklasse N oder ein Nutzfahrzeug sein. Das Fahrzeug kann dabei einen Anhänger umfassen.

Nachfolgend werden Ausführungsformen der vorliegenden Offenbarung unter Bezugnahme auf die beigefügten Figuren beschrieben. Es zeigen:

Fig. 1 einen schematischen Aufbau des offenbarungsgemäßen indirekten Sichtsystems;

Fig. 2 eine Draufsicht auf einen LKW mit Anhänger, um den herum beispielhafte mehrere Bereiche dargestellt sind;

Fig. 3 ein beispielhaftes durch einen Bildsensor abgebildetes Ausgangsbild;

Fig. 4 eine Unterteilung des beispielhaften Ausgangsbilds in Ausgangsbildbereiche gemäß einem Ausgangsnetz und eine Transformation der Ausgangsbildbereiche in Transformationsbildbereiche, die gemäß einem Transformationsnetz festgelegt sind;

Fig. 5A bis 5C eine schematische Ansicht von nichttransformierten Transformationsbildbereichen und zweier Beispiele für transformierte Transformationsbildbereiche;

Fig. 5D bis 5F Bildinhalte, die gemäß den Transformationsbildbereichen aus Fig. 5A bis 5C erhalten werden;

Fig. 6 eine Unterteilung eines Ausgangsbilds in Ausgangsbildbereiche gemäß einem beispielhaften Ausgangsnetz;

Fig. 7 eine Unterteilung des Ausgangsbilds in Ausgangsbildbereiche gemäß einem weiteren beispielhaften Ausgangsnetz;

Fig. 8 eine Unterteilung des Ausgangsbilds in Ausgangsbildbereiche gemäß einem anderen beispielhaften Ausgangsnetz;

Fig. 9 ein beispielhaftes Ausgangsbild, bei dem eine als Referenz verwendete untere Seitenkante und eine Verlängerung einer Vorderkante verzerrt sind;

Fig. 10 eine durch Transformation des beispielhaften Ausgangsbilds erhaltenes Transformationsbild, in dem die als Referenz verwendete Seitenkante und die Verlängerung der Vorderkante als gerade Linien angezeigt sind;

Fig. 11 und Fig. 12 beispielhafte durch einen Bildsensor abgebildete Ausgangsbilder, wobei ein Mittelpunkt des Objektivs so verschoben ist, dass er einen Punkt abbildet, der innerhalb eines Bereichs liegt, der 1,5 m seitlich neben einer Fahrzeugkante liegt;

Fig. 13 eine Transformation eines Ausgangsbilds in ein Transformationsbild bei Verwendung eines Ausgangsnetzes, das Maschen mit einer unterschiedlichen Größe aufweist, wobei gesetzliche Sichtfelder **II,** IV und V nach UN/ECE-R46 gezeigt sind.

Nachfolgend erfolgt eine Beschreibung von beispielhaften Ausführungsformen unter Bezugnahme auf die Figuren. In den Figuren ist gleichen oder sich entsprechenden Elementen das gleiche Bezugszeichen zugewiesen. Es ist anzumerken, dass die Beschreibung der beispielhaften Ausführungsformen nicht dafür vorgesehen ist, den Schutzumfang der vorliegenden Offenbarung zu begrenzen.

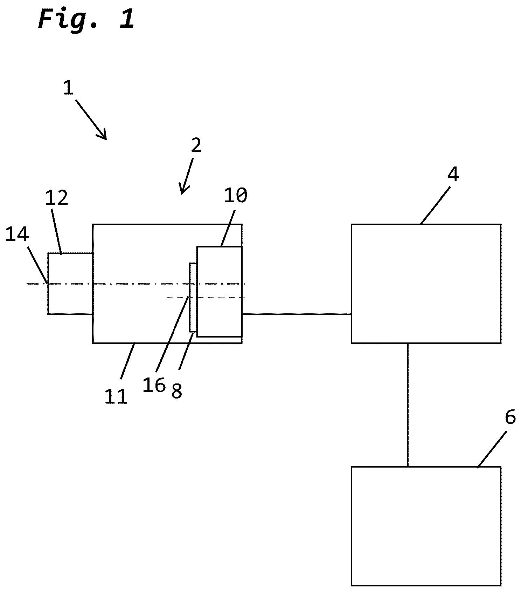

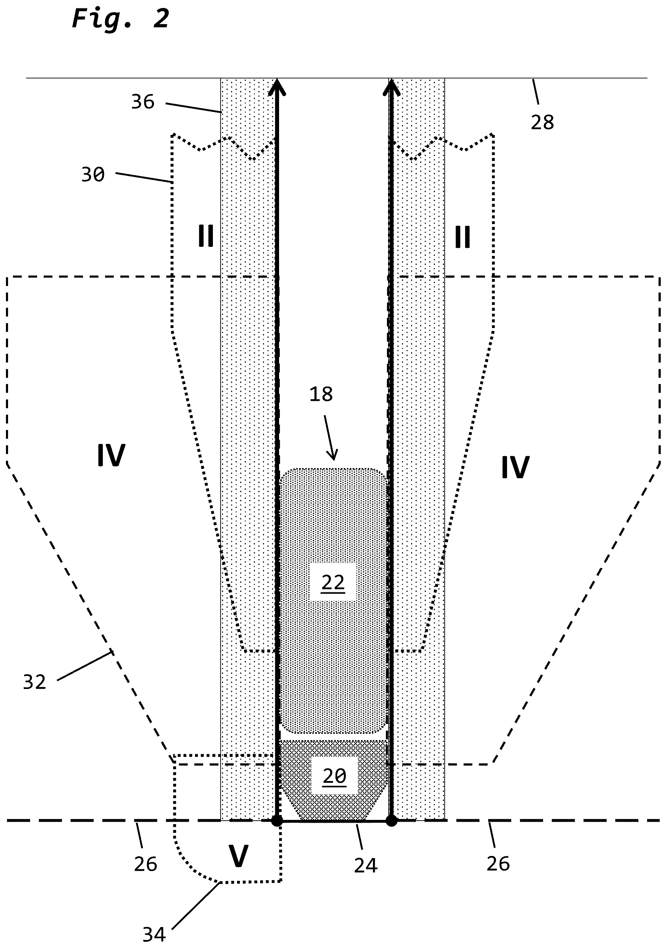

Fig. 1 zeigt ein indirektes Sichtsystem 1, das für ein Fahrzeug 18 (siehe Fig. 2) anwendbar ist. Das indirektes Sichtsystem 1 weist eine Bildaufnahmeeinheit 2, eine Verarbeitungseinheit 4 und eine Wiedergabeeinheit 6 auf. Die Bildaufnahmeeinheit 2 ist kabelgebunden oder kabellos mit der Verarbeitungseinheit 4 zum Datenaustausch verbunden. Weiterhin ist die Verarbeitungseinheit 4 kabelgebunden oder kabellos mit der Wiedergabeeinheit 6 zum Datenaustausch verbunden.

Die Bildaufnahmeeinheit 2 weist einen Bildsensor 8 auf, der auf einer Halteeinrichtung 10 angebracht ist. Der Bildsensor 8 und die Halteeinrichtung 10, die eine Platine umfassen kann, sind in einem Gehäuse 11, das an einer Außenseite des Fahrzeugs 18, insbesondere auf Höhe einer A-Säule des Fahrzeugs 18 in ungefähr 2 - 3,5 m Höhe anbringbar oder angebracht ist, untergebracht. In dem Gehäuse 11 ist auch ein Objektiv 12 untergebracht, das mehrere Linsen zum Abbilden einer Umgebung um das Fahrzeug 18 herum auf dem Bildsensor 8 aufweist. Dabei weist das Objektiv 12 einen Mittelpunkt 14 auf. Der Bildsensor 8 weist ebenfalls einen Mittelpunkt 16 auf. Wie in Fig. 1 durch die beiden Linien angedeutet, sind die beiden Mittelpunkte 14, 16 jedoch nicht deckungsgleich, sondern sind zueinander versetzt. Mit anderen Worten, das Objektiv 12 und der Bildsensor 8 sind exzentrisch zueinander angeordnet. Die exzentrische Anordnung ist dabei größer als eine mögliche Fertigungstoleranz.

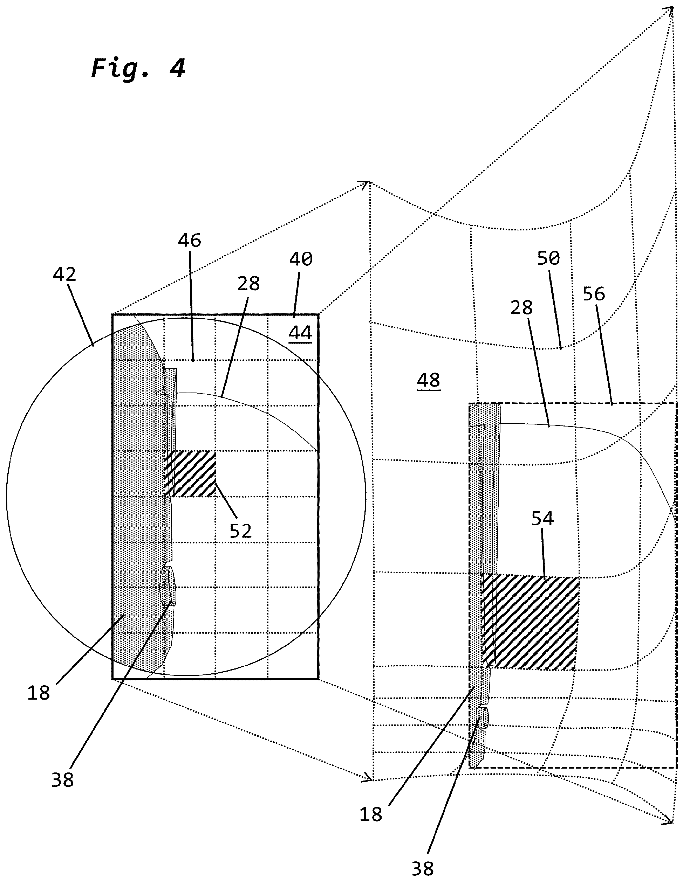

Die Verarbeitungseinheit 4 ist ausgebildet, um ein von der Bildaufnahmeeinheit 2 aufgenommenes Bild von der Umgebung um das Fahrzeug herum als ein Ausgangsbild 44 (siehe Fig. 4) zu empfangen und das Ausgangsbild 44 zu transformieren, um ein Transformationsbild 48 (siehe Fig. 4) zu erhalten. Dazu weist die Verarbeitungseinheit 4 einen Speicher, in dem ein Computerprogramm gespeichert ist, und mindestens eine CPU zum Ausführen des im Speicher gespeicherten Computerprogramms auf. Demzufolge wird das Ausgangsbild 44 durch Ausführen des Computerprogramms in das Transformationsbild 48 transformiert. Darüber hinaus sind in dem Speicher Daten mindestens eines Ausgangsnetzes 46 (siehe Fig. 4) und mindestens eines Transformationsnetzes (siehe Fig. 4), die später noch im Detail beschrieben werden, gespeichert. Die Verarbeitungseinheit 4 kann dabei in unmittelbarer Nähe zu der Bildaufnahmeeinheit 2 angeordnet sein. Beispielsweise kann die Verarbeitungseinheit 4 in dem Gehäuse 11 der Bildaufnahmeeinheit 2 angeordnet sein. Alternativ kann die Verarbeitungseinheit 4 auch in einem eigenen Gehäuse (nicht gezeigt) in einem Innenraum des Fahrzeugs 18 angeordnet sein.

Die Wiedergabeeinheit 6 ist ausgebildet, um zumindest einen Ausschnitt 56 (siehe Fig. 4) des Transformationsbilds 48, das sie zu diesem Zweck von der Verarbeitungseinheit 4 empfängt, anzuzeigen. Die Wiedergabeeinheit 6 entspricht somit einer optischen Ausgabeeinheit, wie etwa einem Display. Die Wiedergabeeinheit 6 kann dabei im Innenraum des Fahrzeugs 18 an einer A-Säule etwa in dem Bereich, in dem die Bildaufnahmeeinheit 2 an der Außenseite des Fahrzeugs 18 angebracht ist, angeordnet sein. Alternativ kann auch eine bereits in dem Fahrzeug 18 vorhandene optische Ausgabeeinheit als Wiedergabeeinheit 6 dienen. Die Wiedergabeeinheit 6 kann den Ausschnitt 56 des Transformationsbilds 48 vollflächig anzeigen. Alternativ ist es auch denkbar, dass nur ein Bereich der Wiedergabeeinheit 6 zur Ausgabe des Ausschnitts 56 des Transformationsbilds 48 verwendet wird. Weiterhin kann auch eine Umschaltung zwischen einer vollflächigen Anzeige und einer auf einen Bereich begrenzten Anzeige des Ausschnitts 56 des Transformationsbilds 48 beispielsweise durch einen Fahrer erfolgen. Zudem kann die Wiedergabeeinheit 6 auch eine Touch-Eingabefunktion aufweisen.

Fig. 2 zeigt mehrere Bereiche in einer Umgebung um ein Fahrzeug 18 herum. Das Fahrzeug 18 ist in dem in Fig. 2 gezeigten Beispiel ein Lkw, der eine Zugmaschine 20 und einen Anhänger 22, die in einer geraden Ausrichtung zueinanderstehen, aufweist. Außerdem ist eine Vorderkante 24 des Fahrzeugs 18 sowie eine Verlängerung 26 der Vorderkante 24 auf beiden Seiten des Fahrzeugs 18 gezeigt. Hinter dem Fahrzeug 18 ist eine Horizontlinie 28 als eine durchgezogene Linie gezeigt. Diese Linien werden für eine nachfolgende Beschreibung des Ausgangsbilds 44 und des Transformationsbilds 48 herangezogen.

Weiterhin sind ein Sichtfeld II 30 und ein Sichtfeld IV gemäß UN/ECE-R 46 auf beiden Seiten des Fahrzeugs 18 dargestellt. Zudem ist ein Sichtfeld V 34 gemäß UN/ECE-R 46 auf einer Beifahrerseite des Fahrzeugs 18 gezeigt. Es ist zu erwähnen, dass das Sichtfeld V 34 auch auf einer Fahrerseite des Fahrzeugs 18 überwacht werden kann. Weiterhin ist ein Bereich 36 gezeigt, der sich von der Verlängerung 26 der Vorderkante 24 bis zu der Horizontlinie 28 in einem vorgegebenen Abstand neben dem Fahrzeug ausbreitet. Der vorgegebene Abstand kann dabei insbesondere 1,5 m betragen. Diese beschriebenen Bereiche sind ein sicheres Führen des Fahrzeugs 18 von großer Bedeutung.

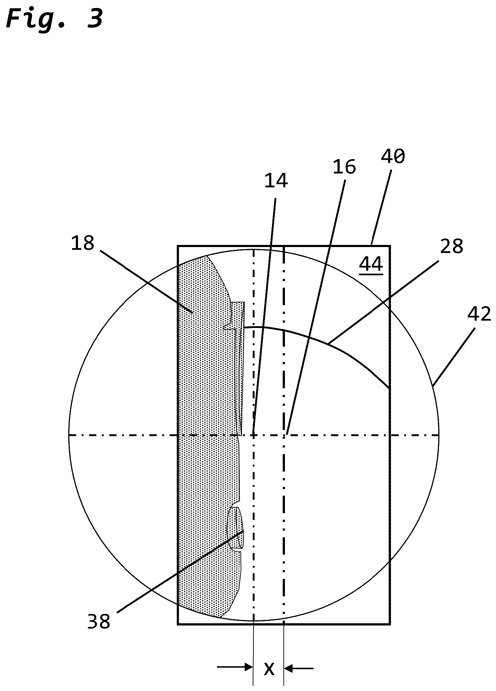

Fig. 3 zeigt eine Aufnahme des Fahrzeugs 18, in der ein Vorderrad 38 zu sehen ist, auf einer gedachten Bildsensorfläche 40. Darüber hinaus ist eine Objektivfläche 42 gezeigt. Die auf der Bildsensorfläche 40 abgebildete Aufnahme wird nachfolgend als Ausgangsbild 44 bezeichnet. Wie in Fig. 3 zu erkennen ist, ist der Mittelpunkt 14 des Objektivs 12 in Bezug auf den Mittelpunkt 16 des Bildsensors 8 zum Fahrzeug 18 hin um den Abstand x in horizontaler Richtung verschoben. Da der Mittelpunkt 14 zum Fahrzeug 18 hin verschoben ist, ist eine seitliche Unterkannte des Fahrzeugs 18, die als Fahrzeugreferenz verwendet wird und sich auch über den Anhänger 22 des Fahrzeugs 18 erstreckt, mit geringerer Verzerrung abbildbar, als dies der Fall wäre, wenn die Mittelpunkte 14, 16 deckungsgleich wären. Weiterhin ist die Horizontlinie 28, die aufgrund eines größeren Abstands zum Mittelpunkt 14 stärker gekrümmt abgebildet wird, gezeigt.

Fig. 4 zeigt links das auf der Bildsensorfläche 40 abgebildete Ausgangsbild 44. Nachdem das Ausgangsbild 44 durch die Verarbeitungseinheit 4 empfangen wurde, überlagert die Verarbeitungseinheit 4 dem Ausgangsbild 44 ein Ausgangsnetz 46, um das Ausgangsbild 44 in Ausgangsbildbereiche zu unterteilen. Nachdem die Verarbeitungseinheit 4 das Ausgangsbild 44 in die Ausgangsbildbereiche unterteilt hat, transformiert sie die Ausgangsbildbereiche in Transformationsbildbereiche, die durch ein Transformationsnetz 50 festgelegt sind. Wie in Fig. 4 zu erkennen ist, weisen das Ausgangsnetz 46 und das Transformationsnetz 50 dieselbe Anzahl an Maschen, die durch Kanten und Knoten definiert sind, auf. Die Kanten und Knoten fungieren dabei als Stützstellen für die dadurch definieren Bereiche. Im Vergleich zum Ausgangsnetz 46 sind die Kanten und Knoten im Transformationsnetz 50 jedoch verändert und bei einer Transformation der Ausgangsbildbereiche in die Transformationsbereiche führt die Verarbeitungseinheit 4 eine Interpolation der Ausgangsbildbereiche zum Erhalten der Transformationsbildbereiche durch. Beispielhaft ist in Fig. 4 der Ausgangsbildbereich 52 schraffiert dargestellt. Dieser wird bei der Transformation des Ausgangsbilds 44 in das Transformationsbild 48 in den Transformationsbildbereichs 54 transformiert. Dabei ist zu erkennen, dass die Knoten des Transformationsbildbereichs 54 im Vergleich zu den Knoten des Ausgangsbildbereichs 52 weiter auseinanderliegen. Demnach wird der in dem Transformationsbildbereich 54 vorhandene Bildinhalt vergrößert angezeigt. Weiterhin findet in einem neben dem Fahrzeug 18 liegenden Bereich eine Verzerrungskorrektur statt, so dass die Horizontlinie 28 im Transformationsbild 48 zunächst abschnittsweise gerade angezeigt wird. In einem äußeren Bereich des Transformationsbilds 48 erfolgt jedoch eine Stärkeverzerrung, so dass die Horizontlinie 28 stärker abknickt. Da das Transformationsbild 48 gegenüber dem Ausgangsbild 44, wie in Fig. 4 gezeigt, deutlich größer ist, wird nur ein Ausschnitt 56 des Transformationsbilds 48 auf der Wiedergabeeinheit 6 angezeigt.

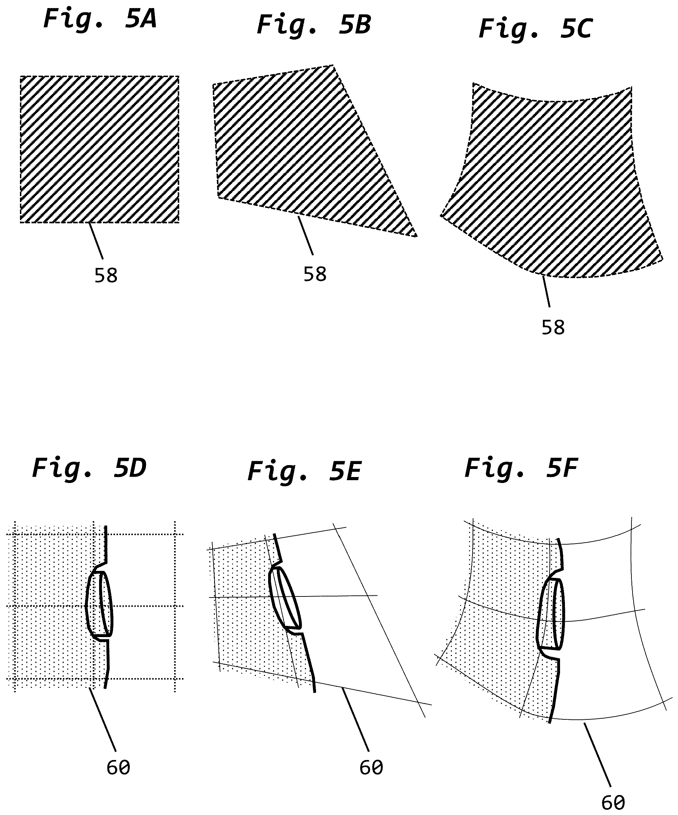

Figur 5A zeigt eine schematische Ansicht von nicht transformierten Transformationsbildbereichen 58. Figur 5B zeigt ein erstes Beispiel von transformierten Transformationsbildbereichen 58, wobei nur die Lage der Knoten und Kanten geändert ist. In dem in Figur 5B gezeigten Beispiel von transformierten Transformationsbildbereichen 58 wird zudem auch ein Verlauf der Kanten geändert. Demnach ergeben sich die in den Figuren 5D bis 5F gezeigten Bildinhalte. Figur 5D wird der Bildinhalt wie durch den Bildsensor aufgenommen dargestellt. Sind die Transformationsbildbereich 58 jedoch im Vergleich zu den entsprechenden Ausgangsbildbereichen in ihrer Dimension vergrößert, wird der Bildinhalt 60 vergrößert angezeigt. Durch die Änderung der Lage der Kanten und Knoten ergibt sich der in Figur 5E dargestellte Bildinhalt 60. Es ist zu erkennen, dass sich eine Form des dargestellten Bildinhalts 60 entsprechend der Änderung der Lage der Kanten und Knoten ändert. Weiterhin kann auch ein Verlauf von Kanten in dem Bildinhalt 60 entsprechend eines Verlaufs der Kanten der dazugehörigen Transformationsbildbereichs 58 geändert werden. Durch die Änderung der Lage der Kanten und Knoten sowie die Anpassung des Verlaufs der Kanten kann folglich eine geeignete Anpassung des Bildinhalts bei der Transformation des Ausgangsbilds 44 in das Transformationsbild 48 erfolgen.

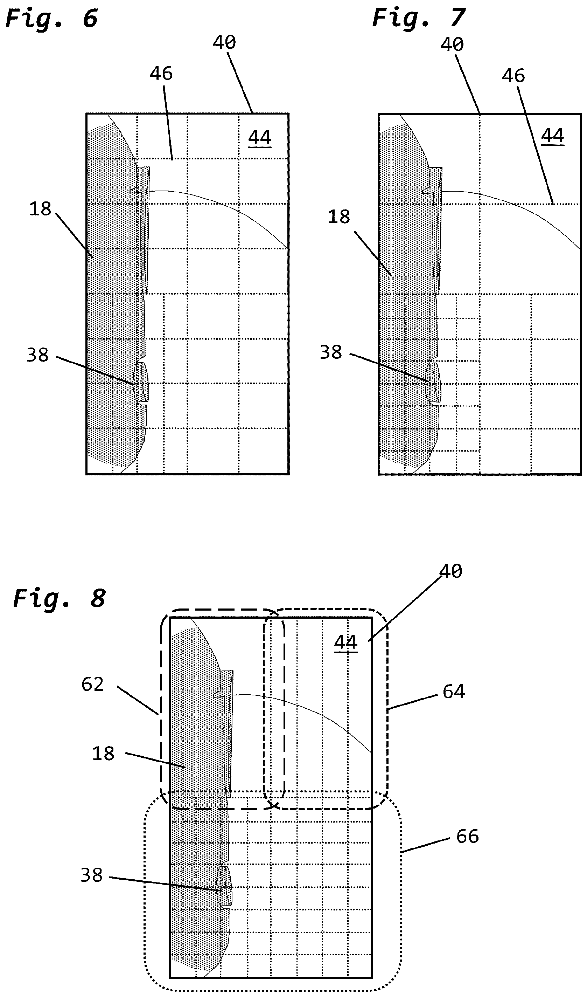

Fig. 6 zeigt das auf der Sensoroberfläche 40 abgebildete Ausgangsbild 44, dass mittels des Ausgangsnetzes 46 in die Ausgangsbildbereiche unterteilt ist. Dabei weisen die Maschen des Ausgangsnetzes 46 eine unterschiedliche Form und eine unterschiedliche Größe auf. In einem oberen Bereich sowie in einer rechten Hälfte des Ausgangsbilds 44 weisen die Maschen des Ausgangsnetzes 46 eine quadratische Form auf und sind gleich groß. Im Bereich des Vorderrads 38 des Fahrzeugs 18 hingegen weisen die Maschen eine rechteckige Form auf und sind deutlich kleiner als die übrigen Maschen. Durch die Festlegung kleinerer Maschen kann eine feinere Anpassung des Bildinhalts erfolgen. Durch die Festlegung größerer Maschen können jedoch größere Bildinhalte in gleicher Weise angepasst werden.

Fig. 7 zeigt das auf der Sensorfläche 40 abgebildete Ausgangsbild 44, das durch ein weiteres Ausgangsnetz 46 in Ausgangsbildbereiche unterteilt ist. In dem weiteren Ausgangsnetz 46 sind die Maschen in der oberen Hälfte des Ausgangsbilds 44 deutlich größer als in einer unteren Hälfte festgelegt. In der unteren Hälfte des Ausgangsbilds 44 sind die Maschen im Bereich des Vorderrads 38 deutlich kleiner als im Bereich rechts daneben festgelegt.

Fig. 8 zeigt das auf der Sensorfläche 40 abgebildete Ausgangsbild 44, das durch ein anderes Ausgangsnetz 46 in Ausgangsbildbereiche unterteilt ist. Das Ausgangsnetz 46 kann dabei entsprechend der Festlegung der Maschen in die Ausgangsnetzbereiche 62, 64 und 66 unterteilt werden. In dem ersten Ausgangsnetzbereich 62 ist lediglich eine Masche festgelegt, da in diesem Bereich nur eine geringe Anpassung des Bildinhalts, wenn überhaupt eine Größenänderung, erfolgen soll. In dem zweiten Ausgangsnetzbereich 64 erstrecken sich längliche rechteckige Maschen über eine gesamte Höhe des zweiten Ausgangsnetzbereichs 64. Auf diese Weise kann eine Formänderung der Kanten über einen größeren Bildinhalt hinweg zum Verzerren oder Entzerren von in dem Bildausschnitt dargestellten Kanten erfolgen. In dem dritten Ausgangsnetzbereich 66 sind die Maschen des Ausgangsnetzes 46 deutlich kleiner festgelegt, so dass eine stärkere und feingranulare Anpassung des Bildinhalts bei Transformation des Ausgangsbilds 44 in das Transformationsbild 48 erfolgen kann.

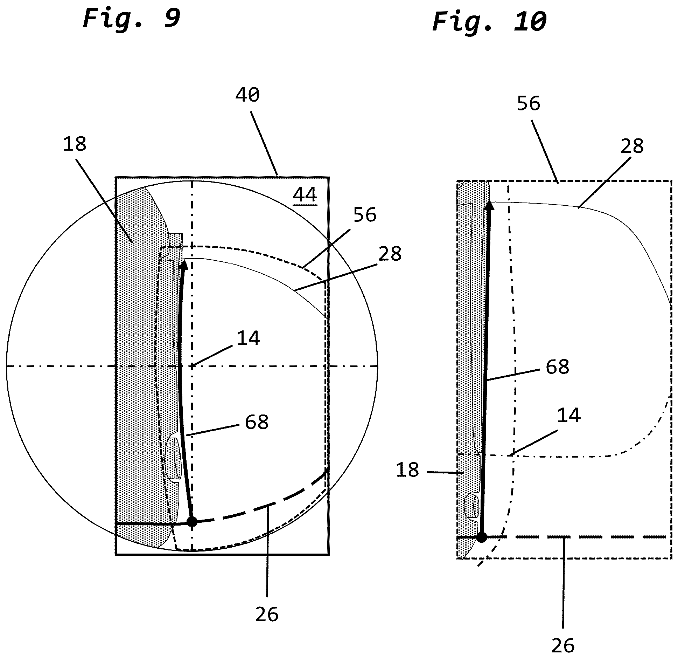

Fig. 9 zeigt das auf der Bildsensorfläche 40 abgebildete Ausgangsbild 44. Obwohl der Mittelpunkt 14 des Objektivs 12 in Richtung des Fahrzeugs 18 verschoben ist, wird beispielsweise aufgrund eines großen Öffnungswinkels der Bilderfassungseinheit 2 eine seitliche Unterkante 68 gekrümmt abgebildet. Aufgrund eines größeren Abstands vom Mittelpunkt 14 des Objektivs 12 wird die Verlängerung 26 der Vorderkante 24 sogar noch stärker gekrümmt angezeigt.

Das in Fig. 9 dargestellte Ausgangsbild 44 wird durch die Verarbeitungseinheit 4 mittels eines Ausgangsnetzes 46 und eines Transformationsnetzes 50 in das Transformationsbild 48 transformiert, dessen angezeigter Ausschnitt 56 in Fig. 10 dargestellt ist. Es ist anzumerken, dass der durch den Ausschnitt 56 angezeigte Bildinhalt auch in der Darstellung des Ausgangsbilds 44 in Fig. 9 gezeigt ist, um die ursprüngliche Abbildung zu veranschaulichen. Wie in Fig. 10 zu erkennen ist, ist das verwendete Transformationsnetz 50 so ausgelegt, dass die seitliche Unterkante 68 und die Verlängerung 26 der Vorderkante 24 als gerade Linien in dem Ausschnitt 56 dargestellt sind. Weiterhin ist das Transformationsnetz 50 so ausgebildet, dass in dem angezeigten Ausschnitt 56 die Horizontlinie 28 in einem Bereich neben dem Fahrzeug 18 nahezu horizontal verläuft und dann stärker nach unten verzerrt ist, als die im Ausgangsbild 44 der Fall ist.

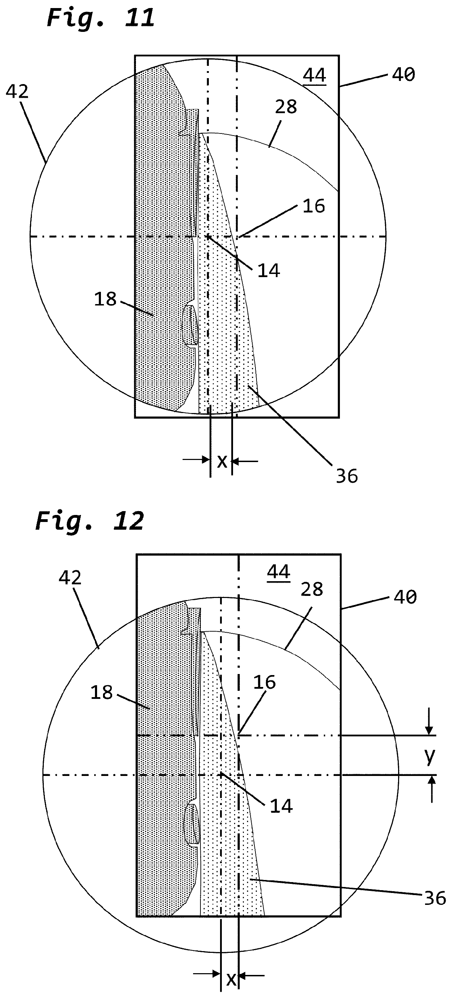

Fig. 11 zeigt das auf der Bildsensorfläche 40 dargestellte Ausgangsbild 44. Ferner sind der Mittelpunkt 14 des Objektivs 12 und ein Mittelpunkt 16 des Bildsensors 8 gezeigt. Zusätzlich ist der Bereich 36, der sich von der Verlängerung 26 bis zur Horizontlinie 28 in einem Abstand von 1,5 neben dem Fahrzeug 18 ausbreitet, gezeigt. Es ist zu erkennen, dass der Mittelpunkt 14 des Objektivs 12 um den Abstand x in horizontaler Richtung gegenüber dem Mittelpunkt 16 des Bildsensors 8 verschoben ist und somit einen Punkt in dem Bereich 36, insbesondere einen Punkt am Boden in dem Bereich 36, abbildet. Durch dieses Maß der Verschiebung des Mittelpunkts 14 des Objektivs 12 hin zum Fahrzeug 18 wird die als Fahrzeugreferenz verwendete seitliche Unterkante 68 (siehe Fig. 9) mit einer geringeren Verzerrung angezeigt, als dies bei übereinanderliegenden Mittelpunkten 14 und 16 der Fall wäre.

Fig. 12 zeigt das in Fig. 11 gezeigte Beispiel, wobei der Mittelpunkt 14 des Objektivs 12 zusätzlich um den Abstand y in vertikaler Richtung gegenüber dem Mittelpunkt 16 des Bildsensors 8 verschoben ist. Der Mittelpunkt 14 bildet weiterhin einen Punkt in dem Bereich 36, insbesondere einen Punkt am Boden in dem Bereich 36, ab.

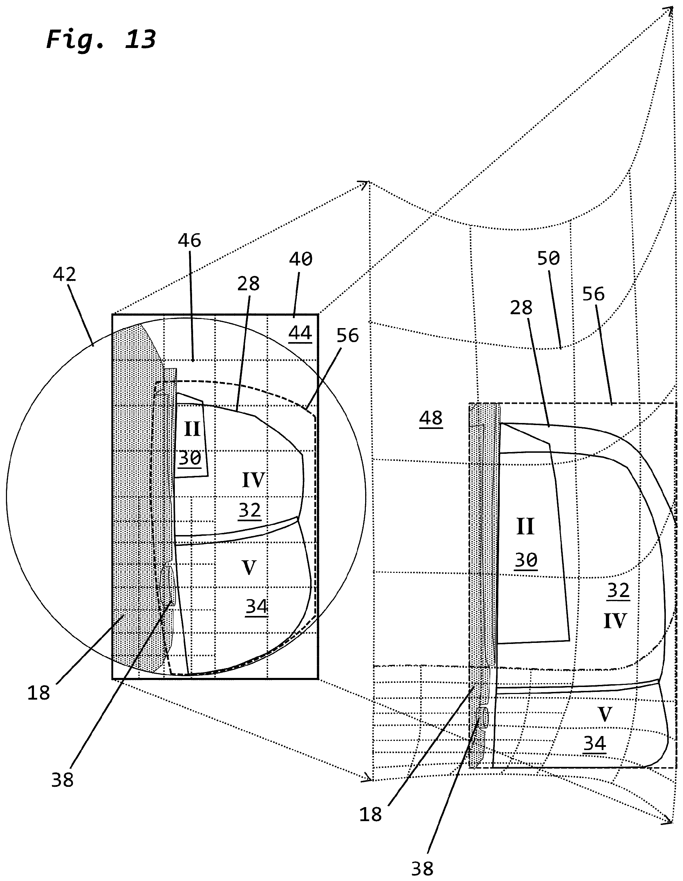

Fig. 13 zeigt links das auf der Bildsensorfläche 40 aufgenommene Ausgangsbild 44, das durch das Ausgangsnetz 46 in Ausgangsbildbereich mit unterschiedlicher Größe unterteilt ist. Zudem sind das Sichtfeld II 30, das Sichtfeld IV 32 und das Sichtfeld V 34 gemäß UN/-ECE-R46 gezeigt. Das Ausgangsbild 44 wird durch die Verarbeitungseinheit 44 in das Transformationsbild 48 transformiert, dessen Ausschnitt 56 auf der Wiedergabeeinheit 6 angezeigt wird. Durch Transformation werden das Sichtfeld II 30, das Sichtfeld IV 32 und das Sichtfeld 34 V angepasst, so dass sie auf der Wiedergabeeinheit gemäß der jeweiligen gesetzlichen Vorgabe nach UN/-ECE-R46 auf der Wiedergabeeinheit 6 angezeigt werden. Insbesondere wird das Sichtfeld II 30 nahezu unverzerrt dargestellt. Das Sichtfeld IV 32 wird vor allem in der Höhe gestreckt. Zu einem äußeren Rand des angezeigten Ausschnitts 56 hin, wird das Sichtfeld IV 32 jedoch deutlich verzerrt. Das Sichtfeld V 34 wird in seiner Höhe deutlich gestaucht und im Bereich des Vorderrads 38 stark verzerrt. Demzufolge können das Sichtfeld II 30, das Sichtfeld IV 32 und das Sichtfeld V 34 gemäß ihrer jeweiligen gesetzlichen Vorgabe auf der Wiedergabeeinheit 6 übergangslos angezeigt werden.

Bezugszeichenliste

| | |
|---|---|
| 1 | Indirektes Sichtsystem |
| 2 | Bildaufnahmeeinheit |
| 4 | Verarbeitungseinheit |
| 6 | Wiedergabeeinheit |
| 8 | Bildsensor |
| 10 | Halteeinrichtung |
| 12 | Objektiv |
| 14 | Mittelpunkt des Objektivs |
| 16 | Mittelpunkt des Bildsensors |
| 18 | Fahrzeug |
| 20 | Zugmaschine |
| 22 | Anhänger |
| 24 | Vorderkante |
| 26 | seitliche Verlängerung der Vorderkante |
| 28 | Horizontlinie |
| 30 | Sichtfeld II |

| | |
|---|---|
| 32 | Sichtfeld IV |
| 34 | Sichtfeld V |
| 36 | Bereich neben dem Fahrzeug |
| 38 | Vorderrad des Fahrzeugs |
| 40 | Bildsensorfläche |
| 42 | Objektivfläche |
| 44 | Ausgangsbild |
| 46 | Ausgangsnetz |
| 48 | Transformationsbild |
| 50 | Transformationsnetz |
| 52 | Ausgangsbildbereich |
| 54 | Transformationsbildbereich |
| 56 | angezeigter Ausschnitt des Transformationsbilds |
| 58 | Transformationsbildbereiche |
| 60 | Bildinhalt |
| 62 | erster Ausgangsnetzabschnitt |
| 64 | zweiter Ausgangsnetzabschnitt |
| 66 | dritter Ausgangsnetzabschnitt |
| 68 | seitliche Unterkante |

| | |
|---|---|
| x | Abstand in horizontaler Richtung |
| y | Abstand in vertikaler Richtung |

**Patentansprüche**

1. Indirektes Sichtsystem (1) für ein Fahrzeug (18), wobei das indirekte Sichtsystem (1) aufweist:

    eine Bildaufnahmeeinheit (2), die einen einzigen Bildsensor (8) und ein Objektiv (12) aufweist und die ausgebildet und an dem Fahrzeug (18) derart anzubringen oder angebracht ist, dass mehrere vorgegebene Bereiche (30, 32, 34, 36) in einer Umgebung des Fahrzeugs (18) durch den Bildsensor (8) in einem Ausgangsbild (44) erfassbar sind, wobei das Objektiv (12) und der Bildsensor (8) derart zueinander angeordnet sind, dass ein Mittelpunkt (14) des Objektivs (12) und ein Mittelpunkt (16) des Bildsensors (8) zueinander versetzt sind,
    eine Verarbeitungseinheit (4), die ausgebildet ist, um das Ausgangsbild (44) in ein Transformationsbild (48) zu transformieren, und
    eine Wiedergabeeinheit (6), die ausgebildet ist, um zumindest einen Ausschnitt (56) des Transformationsbilds (48) anzuzeigen,
    **dadurch gekennzeichnet, dass**
    die Verarbeitungseinheit (4) ausgebildet ist, um das Ausgangsbild (44) zumindest teilweise entsprechend einem Ausgangsnetz (46) in Ausgangsbildbereiche (52) zu unterteilen und die Ausgangsbildbereiche (52) in Transformationsbildbereiche (54), die durch ein Transformationsnetz (50) festgelegt sind, zu transformieren, wobei das Transformationsnetz (50) derart ausgebildet ist, dass die vorgegebenen Bereiche (30, 32, 34, 36) in dem auf der Wiedergabeeinheit (6) angezeigten Ausschnitt (56) des Transformationsbilds (48) entsprechend einer jeweiligen Vorgabe anzeigbar sind.

2. Indirektes Sichtsystem (1) nach Anspruch 1, wobei

    das Ausgangsnetz (46) und das Transformationsnetz (50) einander entsprechende Kanten und Knoten, die als Stützstellen für die Ausgangsbildbereiche (52) bzw. die Transformationsbildbereiche (54) fungieren, aufweisen, im Transformationsnetz (50) einige der Kanten und/oder der Knoten gegenüber dem Ausgangsnetz (46) verändert sind, und die Verarbeitungseinheit (40) ausgebildet ist, um die durch die im Transformationsnetz (50) im Vergleich zum Ausgangsnetz (46) veränderten Kanten und/oder veränderten Knoten gestützten Ausgangsbildbereiche (52) mittels Interpolation in die Transformationsbildbereiche (54) zu transformieren.

3. Indirektes Sichtsystem (1) nach Anspruch 2, wobei der Verlauf und/oder die Lage der Kanten und/oder die Lage der Knoten in dem Transformationsnetz (50) gegenüber dem Ausgansnetz (46) verändert ist.

4. Indirektes Sichtsystem (1) nach einem der Ansprüche 1 bis 3, wobei die Verarbeitungseinheit (4) ausgebildet ist, um das Ausgangsnetz (46) und/oder das Transformationsnetz (50), insbesondere dynamisch, anzupassen.

5. Indirektes Sichtsystem (1) nach Anspruch 4, wobei die Verarbeitungseinheit (4) ausgebildet ist, um das Ausgangsnetz (46) und/oder das Transformationsnetz (50) bei automatischer oder manueller Verstellung des auf der Wiedergabeeinheit (6) angezeigten Ausschnitts (56) des Transformationsbilds (48) und/oder bei einer Ansichtsumstellung auf der Wiedergabeeinheit (6) anzupassen.

6. Indirektes Sichtsystem (1) nach einem der Ansprüche 1 bis 5, wobei der Mittelpunkt (14) des Objektivs (12) im Vergleich zum Mittelpunkt (16) des Bildsensors (8) in Richtung des Fahrzeugs (18) hin verschoben ist.

7. Indirektes Sichtsystem (1) nach Anspruch 6, wobei der Mittelpunkt (14) des Objektivs (12) einen Punkt, der innerhalb eines Abstands von bis zu 1,5 m zu einer Seite des Fahrzeugs (18) liegt, abbildet.

8. Indirektes Sichtsystem (1) nach einem der Ansprüche 1 bis 7, wobei das Transformationsnetz (50) derart ausgebildet ist, dass eine als Fahrzeugreferenz verwendete Kante, insbesondere eine seitliche Unterkante (68), des Fahrzeugs (18) in dem Transformationsbild (48) als eine im Wesentlichen gerade Linie dargestellt ist.

9. Indirektes Sichtsystem (1) nach einem der Ansprüche 1 bis 8, wobei
das Transformationsnetz (50) derart ausgebildet ist, dass eine seitliche Verlängerung (26) einer Vorderkante (24) des Fahrzeugs (18) in dem Transformationsbild (48) als eine gerade Linie dargestellt ist.

10. Indirektes Sichtsystem (1) nach einem der Ansprüche 1 bis 9, wobei

die mehreren Bereiche (30, 32, 34, 36) mindestens einen Bereich (36), der sich von einer Vorderkante (24) des Fahrzeugs (18) bis zu einem hinter dem Fahrzeug (18) liegenden Horizont (28) mit einem vorgegebenen Abstand, insbesondere von 1,5 m, neben dem Fahrzeug (18) erstreckt, umfassen, und
dieser Bereich (36) in dem auf der Wiedergabeeinheit (6) angezeigten Ausschnitt (56) des Transformationsbilds (48) vollständig enthalten ist.

11. Indirektes Sichtsystem (1) nach Anspruch 10, wobei

das Fahrzeug (18) einen Anhänger (22) umfasst, und
in dem auf der Wiedergabeeinheit (6) angezeigten Ausschnitt (56) des Transformationsbilds (46) eine vordere, obere Ecke des Anhängers (22) enthalten ist.

12. Indirektes Sichtsystem (1) nach einem der Ansprüche 1 bis 11, wobei

die mehreren Bereiche (30, 32, 34, 36) die gesetzlichen Sichtfelder II und IV (30, 32), bevorzugt das gesetzliche Sichtfeld V (34) und noch bevorzugter ein größeres Sichtfeld, nach UN/-ECE-R46 umfassen, und
das Transformationsnetz (50) derart ausgebildet ist, dass die gesetzlichen Sichtfelder II und IV (30, 32), bevorzugt das gesetzliche Sichtfeld V (34) und noch bevorzugter ein größeres Sichtfeld, nach UN/ECE-R46 gemäß einer jeweiligen gesetzlichen Vorgabe auf der Wiedergabeeinheit (6) anzeigbar sind.

13. Indirektes Sichtsystem (1) nach einem der Ansprüche 1 bis 12, wobei
die Kanten und Knoten des Ausgangsnetzes (46) so angeordnet sind, dass das Ausgangsnetz (46) Maschen mit einer unterschiedlichen Größe und/oder Form bildet.

14. Indirektes Sichtsystem (1) nach Anspruch 13, wobei
die Größe und/oder die Form der Maschen des Ausgangsnetzes (46) entsprechend einer Stärke der durchzuführenden Transformation des Ausgangsbilds (44) in das Transformationsbild (48) festgelegt ist.

15. Fahrzeug (18), das das indirekte Sichtsystem (1) nach einem der Ansprüche 1 bis 14 aufweist.

Fig. 1

*Fig. 2*

# Fig. 3

Fig. 4

## Fig. 5A

58

## Fig. 5B

58

## Fig. 5C

58

## Fig. 5D

60

## Fig. 5E

60

## Fig. 5F

60

**Fig. 6**

40
46
44
18
38

**Fig. 7**

40
46
44
18
38

**Fig. 8**

40
44
62
64
18
66
38

# Fig. 9

# Fig. 10

**Fig. 11**

**Fig. 12**

*Fig. 13*

**EUROPÄISCHER RECHERCHENBERICHT**

Nummer der Anmeldung

EP 26 15 4713

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 765 031 B1 (MEKRA LANG GMBH & CO KG [DE]) 28. Juni 2017 (2017-06-28) | 1 | INV. G06T3/00 |
| Y | * Absatz [0006] - Absatz [0047] * | 1-10, 12-15 | B60R1/26 |
| A | | 11 | |
| | ----- | | |
| X | EP 2 555 518 A1 (HONDA MOTOR CO LTD [JP]) 6. Februar 2013 (2013-02-06) | 1 | |
| Y | * Absatz [0025] - Absatz [0049] * | 1-10, 12-15 | |
| A | | 11 | |
| | ----- | | |
| X | DE 10 2004 043257 B4 (AUTONETWORKS TECHNOLOGIES LTD [JP] ET AL.) 12. Februar 2009 (2009-02-12) | 1 | |
| Y | * Absatz [0090] - Absatz [0104] * | 1-10, 12-15 | |
| A | | 11 | |
| | ----- | | |
| X | DE 10 2011 010624 A1 (MEKRA LANG GMBH & CO KG [DE]) 9. August 2012 (2012-08-09) | 1 | |
| Y | * Absatz [0044] - Absatz [0130] * | 1-10, 12-15 | |
| A | | 11 | |
| | ----- | | |
| Y | US 2014/009568 A1 (STEC PIOTR [IE] ET AL) 9. Januar 2014 (2014-01-09) | 1-10, 12-15 | |
| A | * Absatz [0036] - Absatz [0071]; Abbildungen 7a,7b * | 11 | |
| | ----- | | |
| A | EP 3 726 473 A1 (SMR PATENTS SARL [LU]) 21. Oktober 2020 (2020-10-21) * Absatz [0038] - Absatz [0079] * | 1-15 | |
| | ----- | | |
| A | EP 3 730 346 B1 (MEKRA LANG GMBH & CO KG [DE]) 29. Dezember 2021 (2021-12-29) * Absatz [0038] - Absatz [0084] * | 1-15 | |
| | ----- | | |

**RECHERCHIERTE SACHGEBIETE (IPC)**

G06T
B60R

Der vorliegende Recherchenbericht wurde für alle Patentansprüche erstellt

| Recherchenort | Abschlußdatum der Recherche | Prüfer |
|---|---|---|
| München | 3. März 2026 | Üreyen, Soner |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

# EP 4 787 286 A1

## ANHANG ZUM EUROPÄISCHEN RECHERCHENBERICHT
## ÜBER DIE EUROPÄISCHE PATENTANMELDUNG NR.

EP 26 15 4713

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-03-2026

| Im Recherchenbericht angeführtes Patentdokument | Datum der Veröffentlichung | Mitglied(er) der Patentfamilie | Datum der Veröffentlichung |
|---|---|---|---|
| EP 2765031 B1 | 28-06-2017 | BR 102014002974 A2 | 02-12-2014 |
| | | CN 103978934 A | 13-08-2014 |
| | | DE 102013002111 A1 | 14-08-2014 |
| | | EP 2765031 A1 | 13-08-2014 |
| | | ES 2637173 T3 | 11-10-2017 |
| | | JP 5816311 B2 | 18-11-2015 |
| | | JP 2014151911 A | 25-08-2014 |
| | | KR 20140101308 A | 19-08-2014 |
| | | US RE48017 E | 26-05-2020 |
| | | US 2014226008 A1 | 14-08-2014 |
| EP 2555518 A1 | 06-02-2013 | CN 102823240 A | 12-12-2012 |
| | | EP 2555518 A1 | 06-02-2013 |
| | | JP 5619873 B2 | 05-11-2014 |
| | | JP WO2011118125 A1 | 04-07-2013 |
| | | US 2013038735 A1 | 14-02-2013 |
| | | WO 2011118125 A1 | 29-09-2011 |
| DE 102004043257 B4 | 12-02-2009 | CN 1637578 A | 13-07-2005 |
| | | DE 102004043257 A1 | 21-04-2005 |
| | | JP 2005110202 A | 21-04-2005 |
| | | US 2005083405 A1 | 21-04-2005 |
| DE 102011010624 A1 | 09-08-2012 | BR 102012002701 A2 | 23-06-2015 |
| | | CN 102673473 A | 19-09-2012 |
| | | DE 102011010624 A1 | 09-08-2012 |
| | | EP 2484558 A1 | 08-08-2012 |
| | | EP 2865569 A1 | 29-04-2015 |
| | | ES 2543435 T3 | 19-08-2015 |
| | | ES 2584337 T3 | 27-09-2016 |
| | | JP 5819455 B2 | 24-11-2015 |
| | | JP 2012178150 A | 13-09-2012 |
| | | JP 2014130617 A | 10-07-2014 |
| | | KR 20120090842 A | 17-08-2012 |
| | | KR 20140044353 A | 14-04-2014 |
| | | KR 20150059724 A | 02-06-2015 |
| | | PL 2484558 T3 | 31-12-2015 |
| | | PL 2865569 T3 | 30-12-2016 |
| | | US 2012200664 A1 | 09-08-2012 |
| US 2014009568 A1 | 09-01-2014 | EP 2870585 A1 | 13-05-2015 |
| | | US 2014009568 A1 | 09-01-2014 |
| | | US 2015178897 A1 | 25-06-2015 |
| | | WO 2014005783 A1 | 09-01-2014 |
| EP 3726473 A1 | 21-10-2020 | KEINE | |

EPO FORM P0461

Für nähere Einzelheiten zu diesem Anhang : siehe Amtsblatt des Europäischen Patentamts, Nr.12/82

Seite 1 von 2

## ANHANG ZUM EUROPÄISCHEN RECHERCHENBERICHT
## ÜBER DIE EUROPÄISCHE PATENTANMELDUNG NR.

EP 26 15 4713

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-03-2026

| Im Recherchenbericht angeführtes Patentdokument | Datum der Veröffentlichung | Mitglied(er) der Patentfamilie | Datum der Veröffentlichung |
|---|---|---|---|
| EP 3730346 B1 | 29-12-2021 | CN 111866446 A | 30-10-2020 |
| | | DE 102019110871 A1 | 29-10-2020 |
| | | EP 3730346 A1 | 28-10-2020 |
| | | ES 2908413 T3 | 29-04-2022 |
| | | US 2020344450 A1 | 29-10-2020 |

EPO FORM P0461

Für nähere Einzelheiten zu diesem Anhang : siehe Amtsblatt des Europäischen Patentamts, Nr.12/82

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2765031 B1
- DE 102014006153 A1
- DE 102014006150 B4